## Europäisches Patentamt
## European Patent Office
## Office européen des brevets

(11) Veröffentlichungsnummer: **0 026 828**
**B1**

(12) # EUROPÄISCHE PATENTSCHRIFT

(45) Veröffentlichungstag der Patentschrift:
18.04.84

(21) Anmeldenummer: 80104933.9

(22) Anmeldetag: 20.08.80

(51) Int. Cl.³: **B 29 C 17/07,** B 29 F 3/00,
G 05 D 5/03

(54) Vorrichtung zur Beeinflussung des Gewichtes eines im Extrusionsblasverfahren hergestellten Hohlkörpers aus thermoplastischem Kunststoff.

(30) Priorität: 05.10.79 DE 2940418

(43) Veröffentlichungstag der Anmeldung:
15.04.81 Patentblatt 81/15

(45) Bekanntmachung des Hinweises auf die Patenterteilung:
18.04.84 Patentblatt 84/16

(84) Benannte Vertragsstaaten:
AT DE FR GB IT

(56) Entgegenhaltungen:
DE - A - 2 535 367
DE - A - 2 608 551
DE - A - 2 742 984
DE - B - 2 544 609
US - A - 3 759 648
US - A - 3 795 719
US - A - 4 097 566

(73) Patentinhaber: Krupp Kautex Maschinenbau GmbH,
D-5300 Bonn 3 (DE)

(72) Erfinder: Daubenbüchel, Werner, Juckaberg 1,
D-5060 Bergisch-Gladbach 4 (DE)
Erfinder: Hess, Dieter, Tannenstrasse 50,
D-5357 Swistal-Morenhoven (DE)

(74) Vertreter: Koepsell, Helmut, Dipl.-Ing., Mittelstrasse 7,
D-5000 Köln 1 (DE)

ACTORUM AG

Vorrichtung zur Beeinflussung des Gewichtes eines im Extrusionsblasverfahren hergestellten Hohlkörpers aus thermoplastischem Kunststoff

Die Erfindung betrifft eine Vorrichtung gemäss dem Oberbegriff des Anspruches 1, die zum Stand der Technik gehört.

Die spaltartige Öffnung ist im Falle der Herstellung von schlauchartigen Vorformlingen als Ringspalt ausgebildet. Da dies in der Praxis der häufigste Anwendungsfall ist, werden im folgenden immer das Herstellen eines schlauchförmigen Vorformlinges sowie ein ringförmiger Austrittsspalt vorausgesetzt. Allerdings ist die Erfindung auch bei Vorformlingen anwendbar, die eine andere Gestalt aufweisen, z.B. folienförmig ausgebildet sind.

Für die Herstellung eines einwandfreien Endproduktes, beispielsweise einer Flasche, eines Kanisters od. dgl., ist es erforderlich, dass der aus dem Strangpresskopf ausgepresste, eine Mindestlänge aufweisende Vorformling aus einer Mindestmaterialmenge besteht, die zudem über die Länge des Vorformlinges richtig verteilt sein muss. Dabei sollte die für die Herstellung eines einwandfreien Endproduktes notwendige Mindestmaterialmenge nicht oder nicht wesentlich überschritten werden, da sonst mehr Material als technisch erforderlich verbraucht werden würde. Zwar ist der Vorformling immer länger als die entsprechende Länge des Formnestes, wobei das überschüssige Material durch die Blasform und/oder die Zuführungseinrichtung für das Druckmittel, z.B. einen Blasdorn, abgequetscht wird. Diese Abfallteile können jedoch im allgemeinen recycl'iert werden. Ein Materialüberschuss hingegen, der durch eine zu grosse Wandstärke des Vorformlinges hervorgerufen wird, ist nicht wiedergewinnbar, da er im herzustellenden Hohlkörper verbleibt und dessen Wandstärke grösser als notwendig macht. D.h., dass eine wirtschaftliche Fertigung eine Beeinflussung der Wandstärke des Vorformlinges und somit des Gewichtes desselben erfordert, da die richtige Wandstärke und damit richtiges Gewicht und richtiges Volumen Voraussetzung dafür sind, dass der als Endprodukt herzustellende Hohlkörper nicht mehr Material aufweist als zur Erfüllung seiner technischen Funktion notwendig ist.

Bei Verwendung eines Strangpresskopfes mit einem Speicherraum, der durch einen Kolben entleerbar ist, bereitet die Festlegung einer bestimmten, von Arbeitszyklus zu Arbeitszyklus gleichbleibenden Materialmenge für jeden Vorformling keine Schwierigkeit, da durch den Speicherraum, solange dessen Volumen nicht verändert wird, die Materialmenge pro Vorformling genau festgelegt ist. Es ist dann gemäss Lehre der DAS 2 544 609 nur noch erforderlich, die Spaltbreite der Austrittsöffnung des Strangpresskopfes derart einzustellen, dass die gegebene Materialmenge so verteilt wird, dass die für die Herstellung eines einwandfreien Endproduktes erforderliche Mindestlänge des Vorformlinges gewährleistet ist. Bei kontinuierlicher Extrusion des Vorformlinges besteht keine Möglichkeit, über einen zwischengeschalteten Speicherraum die Materialmenge pro Vorformling genau zu bestimmen.

Eine bereits zum Einsatz gekommene Vorrichtung zur Beeinflussung des Gewichtes eines im Extrusionsblasverfahren hergestellten Hohlkörpers aus thermoplastischem Kunststoff der einleitend beschriebenen Art hat die in sie gesetzten Erwartungen nicht erfüllt. Dies ist im wesentlichen darauf zurückzuführen, dass, obwohl der gesamte Bewegungsablauf der Blasform und deren Teile zeitstarr gesteuert wird und auch die Schneckendrehzahl konstant ist, sich Schwankungen der Fördermenge pro Zeiteinheit und damit auch der Austrittsgeschwindigkeit des Vorformlinges ergeben können. Dies liegt im wesentlichen darin begründet, dass im Extruder viele andere Einflussgrössen wirksam sind, die zudem einander beeinflussen. Dabei handelt es sich beispielsweise um das Schüttgewicht, die Temperatur, die Viskosität und das Quellverhalten des Materials. Die Vorformlinge weisen somit unterschiedliche Längen und ggf. Gewichte auf mit dem Ergebnis, dass in Abhängigkeit vom Gewicht der Vorformlinge unterschiedliche Auslängungen derselben auftreten, die zur Folge haben, dass auch dann, wenn das Gesamtgewicht des fertigen Hohlkörpers dem Sollwert entspricht, die Verteilung des Materials innerhalb des Hohlkörpers so ungleichmässig sein kann, dass das Endprodukt nicht verwendbar ist. Dies ist z.B. darauf zurückzuführen, dass trotz derselben Wanddicke die aus dem Spalt des Strangpresskopfes pro Zeiteinheit austretende Materialmenge und somit das Gewicht desselben sich ändern und infolgedessen die jeweils vom Formnest aufzunehmenden Abschnitte der Vorformlinge eine unterschiedliche Auslängung erfahren. Hier würde ein zu geringes oder ein zu hohes Gewicht festgestellt werden, obwohl die Spaltbreite richtig eingestellt war. Ein weiterer wesentlicher Nachteil besteht darin, dass bei einer zeitabhängig programmierten Steuerung der Wanddickenverteilung des Vorformlinges über seine Länge die einzelnen Bereiche des Vorformlinges nicht ihre richtige Lage relativ zur Blasform einnehmen. In jedem Falle gilt, dass mit dieser Vorrichtung eine brauchbare Beeinflussung des Gewichtes der Endprodukte nicht erreichbar ist.

Der Erfindung liegt die Aufgabe zugrunde, eine Vorrichtung der eingangs beschriebenen Art so auszugestalten, dass die vorbeschriebenen Nachteile vermieden werden. Insbesondere wird angestrebt, dass über die Spaltbreite der Austrittsöffnung des Strangpresskopfes die Wanddicke des Vorformlinges in ausreichend genauer Weise beeinflusst werden kann, um das Gewicht des Fertigerzeugnisses so nahe wie möglich an einem vorgegebenen Sollwert zu halten. Insbesondere soll sichergestellt sein, dass auch unvermeidbare Unregelmässigkeiten im Betrieb der Strangpresse erfasst und berücksichtigt werden können. Darüber hinaus sollen die Länge der Vorformlinge und die Zeit für die Fertigstellung derselben wenigstens soweit festlegbar sein, dass sie von Arbeitszyklus zu Arbeitszyklus nicht oder nur innerhalb geringer Grenzen schwanken.

Zur Lösung dieser Aufgabe schlägt die Erfindung vor, dass eine die Länge des Vorformlinges erfassende Einrichtung, mittels welcher ein Signal für die Steuerung der Bewegungen der Blasformteile auslösbar ist, und eine Steuereinrichtung, mittels welcher die Zeit, in welcher ein Vorformling hergestellt wird, möglichst konstant gehalten wird, vorgesehen sind.

Durch die die Länge des Vorformlinges erfassende Einrichtung, die Bewegungen der Blasformteile oder der Blasform auslöst, ist sichergestellt, dass zum Zeitpunkt des Schliessens der Blasform der Vorformling immer die gleiche oder nahezu die gleiche Länge aufweist. Das Signal wird zweckmässig dann ausgelöst, wenn die Blasform sich in ganz oder teilweise geöffnetem Zustand in der Aufnahmestation befindet, da in diesem Fall der Zeitpunkt, zu welchem das Signal ausgelöst wird, und der Zeitpunkt, zu welchem der Vorformling seine Soll-Länge erhält, sehr nahe beieinander liegen. Es ist aber auch möglich, das Signal zu einem früheren Zeitpunkt auszulösen, so dass bereits zeitlich vor der Schliessbewegung liegende Bewegungen der Blasform, beispielsweise von der Entformstation in die Aufnahmestation, veranlasst werden, wobei dann alle anderen für den Schliessvorgang noch notwendigen Bewegungen sich anschliessen.

Die Steuereinrichtung, mittels welcher die Zeit, in der der Vorformling gebildet wird, so konstant wie möglich gehalten wird, gibt eine Gewähr dafür, dass, obwohl der Zeitpunkt des Schliessens der Form nicht mehr starr festgelegt ist, sondern vielmehr von der Herstellung des Vorformlinges abhängt, die Zykluszeiten nicht oder nur innerhalb enger Grenzen schwanken. Die angestrebte Konstanthaltung der Zeit für die Vorformlingsherstellung wird vorteilhaft durch eine entsprechende Regulierung der Drehzahl der Schnecke des Extruders bewirkt. Es sind aber auch andere Massnahmen, beispielweise eine Änderung der Temperatur im Extruder und/oder andere Einflussgrössen denkbar.

Zwar offenbart die US-PS 3 759 684 eine Vorrichtung zum Regeln der Länge von schlauchförmigen Vorformlingen aus thermoplastischem Kunststoff, die in Extrusionsblasverfahren zu Fertigerzeugnissen aufgeweitet werden, wobei die Länge der Vorformlinge erfasst und bei Abweichungen von einer Soll-Länge die Extrusionsgeschwindigkeit entsprechend beeinflusst wird. Dies erfolgt durch Regelung der Drehgeschwindigkeit der Schneckenpresse. Ein Beeinflussen des Gewichtes des Fertigerzeugnisses durch entsprechende Regelung der Spaltbreite der Austrittsöffnung wird in der Vorveröffentlichung nicht erwähnt. Dies ist möglicherweise auch darauf zurückzuführen, dass eine Änderung der Spaltbreite der Austrittsöffnung normalerweise eine Änderung der Austrittsgeschwindigkeit des Vorformlings zur Folge hat, also der Zielsetzung der Vorveröffentlichung scheinbar entgegengerichtet ist. Wenn eine konstante Förderleistung des Extruders unterstellt wird, hat beispielsweise eine Verkleinerung der Spaltbreite zur Folge, dass das Material schneller durch die Austrittsöffnung strömt. Umgekehrt tritt im Fall einer Vergrösserung des Austrittsspaltes eine Verringerung der Austrittsgeschwindigkeit ein.

Wenn eine Änderung der Spaltbreite ein bestimmtes Ausmass überschreitet, können zusätzliche Massnahmen getroffen werden, um zu verhindern, dass die Zeit, die für die Herstellung eines Vorformlings benötigt wird, sich wesentlich ändert. Dies kann durch eine die Extrusionsgeschwindigkeit erfassende Einrichtung geschehen, beispielsweise derart, dass der Zeitpunkt, zu welchem der Vorformling seine Soll-Länge erreicht, mit einem Soll-Zeitpunkt verglichen wird und in Abhängigkeit vom Vergleichsergebnis die Drehgeschwindigkeit der Schnecke entweder unverändert bleibt oder schneller oder langsamer eingestellt wird. Es besteht aber auch die Möglichkeit, ggf. zusätzlich eine Einrichtung vorzusehen, mittels welcher die Drehzahl der Schnecke direkt in Abhängigkeit von der Änderung der Breite des Austrittsspaltes und damit vom festgestellten Gewicht des Hohlkörpers verändert wird, beispielsweise derart, dass bestimmten Änderungen der Spaltbreite bestimmte Anpassungen der Umdrehungsgeschwindigkeit der Schnecke zugeordnet sind. Zwecks Erfassung anderer Einflussgrössen wie schwankende Temperaturen, Änderung der Viskosität oder dgl. kann ausserdem noch die bereits erwähnte Einrichtung zur Regelung der Schneckendrehzahl in Abhängigkeit von der Extrusionsgeschwindigkeit und damit von dem Zeitpunkt, in welchem der Vorformling seine Soll-Länge erreicht, vorgesehen sein.

Die Regulierung der Schneckendrehzahl in Abhängigkeit von der Spaltverstellung bzw. in Abhängigkeit von den festgestellten Gewichtsabweichungen der Hohlkörper hat den Vorteil, dass der Abstand zwischen Herstellung eines Hohlkörpers und Feststellung von dessen Gewicht eventuell um einen Arbeitszyklus verringert werden kann. Hierbei ist zu berücksichtigen, dass es im allgemeinen zweckmässig sein wird, nach einer Verstellung der Spaltbreite zum Zwecke der Beeinflussung des Gewichtes des Fertigerzeugnisses den jeweils folgenden Vergleich des Hohlkörpergewichtes mit einem Soll-Wert frühestens nach einer Zeitspanne durchzuführen, die der Anzahl der Arbeitszyklen entspricht, die zwischen dem Zeitpunkt der Herstellung eines Hohlkörpers und dem Zeitpunkt der Feststellung des Gewichtes desselben Hohlkörpers liegen. Diese Massnahme beruht auf der Erkenntnis, dass die Überprüfung des Effektes einer Änderung der Spaltbreite zum Zwecke der Gewichtsbeeinflussung frühestens erst dann erfolgen kann, wenn das Gewicht des ersten Hohlkörpers, der nach erfolgter Änderung der Spaltbreite hergestellt worden war, festgestellt wird. Eine Gewichtsfeststellung unmittelbar nach Durchführung der Änderung der Spaltbreite hätte zur Folge, dass die Überprüfung zunächst an Hohlkörpern stattfindet, die noch zu einem früheren Zeitpunkt, also vor Änderung der Spaltbreite hergestellt worden waren.

Die vorbeschriebenen Sachverhalte tragen der Tatsache Rechnung, dass es nicht oder nur mit sehr grossen Schwierigkeiten möglich sein wird, das Gewicht des Hohlkörpers in der Hohlform oder im Augenblick der Herausnahme aus der Hohlform festzustellen.

Eine Regulierung der Schneckengeschwindigkeit zwecks Kompensation der durch die Änderung der Spaltbreite bewirkten Änderung der Austrittsgeschwindigkeit durch eine die für die Herstellung des Vorformlings notwendige Zeit erfassende Einrichtung kann zur Folge haben, dass zumindest noch ein zusätzlicher Arbeitszyklus abzuwarten ist, bevor das Hohlkörpergewicht festgestellt und mit dem Soll-Wert verglichen werden kann, da die Anpassung der Geschwindigkeit der Schnecke an die neue Spaltbreite die Herstellung eines zusätzlichen Vorformlinges nach der Spaltverstellung, also einen zusätzlichen Arbeitszyklus, erfordert.

Unabhängig davon kann es aber ohnehin vorteilhaft sein, dass nach einer Drehzahländerung der Extruderschnecke der Gewichtsvergleich erst durchgeführt wird, wenn der erste Hohlkörper, der nach Stabilisierung der Betriebsverhältnisse des Extruders hergestellt worden war, für die Gewichtsfeststellungen zur Verfügung steht. Ob und in welchem Umfang eine Änderung der Schneckengeschwindigkeit eine Destabilisierung der Betriebsverhältnisse des Extruders bewirkt, hängt von den jeweils gegebenen Umständen, insbesondere Ausmass der Änderung und dadurch bedingte Beeinflussung anderer Kenngrössen ab.

Es wird im allgemeinen zweckmässig sein, die Spaltbreite der Austrittsöffnungen erst nach Überschreiten eines vorbestimmten Toleranzbereiches in bezug auf die Gewichtsabweichungen des Hohlkörpers zu verstellen. Auf diese Weise kann verhindert werden, dass minimale Gewichtsabweichungen, die ohne praktische Bedeutung sind, eine Änderung der Spaltbreite der Austrittsöffnung bewirken.

Es kann weiterhin vorteilhaft sein, die Gewichtsabweichungen nur innerhalb eines bestimmten Gewichtsbereiches für die Einstellung der Spaltbreite der Austrittsöffnung zu berücksichtigen. Diese Massnahme soll verhindern, dass mit ihrem Gewicht völlig ausserhalb des zu erwartenden Bereiches liegende Hohlkörper für die Festlegung der Spaltbreite der Austrittsöffnung herangezogen werden, da ein bestimmtes Mass unter- oder überschreitende Gewichte auf andere Einflüsse, also nicht auf die Wanddicke des Vorformlinges, zurückgehen. Es kann sich dabei beispielsweise darum handeln, dass noch ein Abfallstück, das normalerweise zwischen Herausnahme des Hohlkörpers aus der Blasform und der Gewichtsfeststellung entfernt wird am Hohlkörper anhaftet. Hierdurch könnte eine Gewichtsvergrösserung verursacht werden, die weit über das Mass der üblichen Schwankungen hinausgeht. Die Berücksichtigung der Gewichte innerhalb eines bestimmten Bereiches kann sowohl bei der Bildung eines Mittelwertes aus dem Gewicht mehrerer Hohlkörper als auch bei Vergleich des Gewichtes einzelner Hohlkörper mit dem Soll-Wert erfolgen. Da die Mittelwertbildung eine bestimmte Anzahl von Hohlkörpern voraussetzt, kann so vorgegangen werden, dass bei Überschreiten oder Unterschreiten des bestimmten Gewichtsbereiches nur der der jeweiligen Grenze entsprechende Wert für die Mittelwertbildung benutzt wird. D.h., dass beispielsweise bei Überschreiten des Bereiches der obere Grenzwert desselben für die Mittelwertbildung herangezogen wird. Umgekehrt gilt, dass bei Unterschreiten dieses Bereiches der untere Grenzwert desselben für die Mittelwertbildung benutzt wird.

Derartige aus dem Normalbereich herausfallende Gewichte können aber auch gänzlich unberücksichtigt bleiben.

Ferner kann die Bildung eines Mittelwertes aus dem Gewicht einer Gruppe von zweckmässig aufeinanderfolgenden Hohlkörpern fortlaufend durchgeführt werden, wobei nach jedem Arbeitszyklus der jeweils älteste Hohlkörper der für die vorangegangene Mittelwertbildung verwendeten Hohlkörpergruppe durch einen neuen Hohlkörper ersetzt wird. In diesem Fall würde eine Mittelwertbildung und eine Auswertung derselben fortlaufend erfolgen, bis es zu einer Veränderung der Spaltbreite kommt. Dann sollten wieder soviel Arbeitszyklen abgewartet werden wie notwendig sind, dass nach der Änderung der Spaltbreite und ggf. nach Stabilisierung der Schneckenpresse hergestellte Hohlkörper für die Mittelwertbildung zur Verfügung stehen. Es ist selbstverständlich auch möglich, bei der Mittelwertbildung oder bei Vergleich einzelner Hohlkörper mit dem Soll-Gewicht nur beispielsweise jeden zweiten Hohlkörper zu berücksichtigen.

Gemäss einem weiteren Vorschlag der Erfindung kann die Anordnung so getroffen sein, dass das Ausmass der Änderung der Breite des Spaltes abhängig ist vom Ausmass der Abweichung des Hohlkörpergewichtes bzw. des Mittelwertes vom Soll-Gewicht. Die notwendige Änderung der Breite des Spaltes kann pro Arbeitszyklus um einen voreinstellbaren Schritt erfolgen, so dass ggf. eine über zwei oder mehr Arbeitszyklen sich erstreckende Änderung notwendig ist. Dies wird jedoch gegenüber einem einzigen, dann entsprechend grossen Änderungsschritt im allgemeinen dann vorteilhaft sein, wenn die Folgen einer derartig grossen Änderung der Breite des Spaltes mit entsprechender Änderung der Schneckengeschwindigkeit zu erheblichem Beeinflussen des Betriebszustandes des gesamten aus Schneckenpresse und Strangpresskopf bestehenden Systems führen können, so dass es entsprechend lange dauern kann, bis nach Durchführung der Änderung die Betriebsverhältnisse der Schneckenpresse sich wieder stabilisiert haben. In solchen Fällen kann es zweckmässig sein, einen kleineren proportionalen Verstellbereich nach oben zu begrenzen, so dass innerhalb dieser Grenze proportional, darüber jedoch schrittweise zum Erreichen der Endgrösse verstellt wird.

Vorteilhaft sollte die Änderung der Spaltbreite in Abhängigkeit vom Gewicht des oder der Hohlkörper im Bereich des Überganges von zwei aufeinanderfolgenden Vorformlingen durchgeführt werden, so dass der Vorformlingsbereich, der die Austrittsöffnung passierte, als die Änderung der Spaltbreite durchgeführt wurde, innerhalb eines Abfallstückes liegt.

Die Spaltbreite der Austrittsöffnung kann während des Auspressens des Vorformlinges zusätzlich nach einem bestimmten Programm zur Regulierung der Wanddicke des Vorformlinges über dessen Länge verstellbar sein. Es handelt sich dabei um die Anpassung der Wanddicke beispielsweise an die endgültige Gestalt des Hohlkörpers. Dies kann in der Weise geschehen, dass die Bereiche des Vorformlinges, die während des Aufweitvorganges in der Blasform sehr stark gedehnt werden, eine grössere Wandstärke erhalten als Bereiche, die in weniger starkem Umfang gedehnt werden, so dass beispielsweise trotz unterschiedlicher Aufweitung des Vorformlings am Fertigerzeugnis eine im wesentlichen gleiche Wandstärke vorhanden ist. Bei zusätzlicher Regulierung der Wanddicke des Vorformlinges nach einem Programm sind zwei Reguliervorgänge zu unterscheiden:

Einmal erfolgt die Einstellung der Austrittsöffnung bei Anwendung der Lehre gemäss der Erfindung, um über die Wanddicke das Volumen des den Vorformling bildenden Materials und damit des Gewichtes des Fertigerzeugnisses bestimmen oder beeinflussen zu können. Zum anderen wird die Gesamtspaltbreite während der Herstellung des Vorformlinges in Abhängigkeit von einem vorgegegebenen Programm geändert mit dem Ziel, über die Länge des Vorformlinges eine bestimmte Wandstärkenverteilung zu erreichen. Dabei besteht die Möglichkeit, die sich aus der Wanddicken-Programmierung ergebende Änderung des Spaltes zu addieren. Eine zweite Möglichkeit besteht darin, die sich aus dem jeweiligen Wanddickenprogramm während des Auspressvorganges ergebenden Änderungen der Spaltbreite proportional zu ändern.

Die Möglichkeit, die Spaltbreite der Austrittsöffnung während des Auspressens des Vorformlinges nach einem bestimmten Programm zur Erzielung einer bestimmten Wandstärkenverteilung des Vorformlinges über dessen Länge zu verstellen, ist an sich bekannt. Selbstverständlich hat auch eine Änderung der Spaltbreite in Abhängigkeit vom vorerwähnten Programm eine Änderung der Austrittsgeschwindigkeit des Vorformlinges zur Folge. Es ist jedoch nicht erforderlich, diese Änderung durch entsprechende Anpassung der Schneckengeschwindigkeit zu kompensieren, da die auf das Wanddicken-Programm zurückkehrenden Änderungen der Austrittsgeschwindigkeit bei jedem Arbeitszyklus gleich sind und somit die Dauer der Herstellung eines Vorformlinges von Arbeitszyklus zu Arbeitszyklus durch die auf das Programm zurückgehenden Änderungen der Spaltbreite keinerlei Änderung erfährt.

Ein wesentlicher Vorteil der Vorrichtung gemäss der Erfindung besteht darin, dass bei Anwendung eines Wanddicken-Programms die programmierte Wanddickenverteilung auf dem Vorformling immer die richtige Position relativ zur Blasform einnimmt.

In Fig. 1 der Zeichnung ist als bevorzugtes Beispiel eine Extrusionsblasvorrichtung mit zugehöriger Steuer- und Regeleinrichtung im Schema dargestellt.

Fig. 2 zeigt ein Diagramm, welches die in den Bewegungszyklus der Blasform eingeschaltete Wartezeit in der Aufnahmestation erläutert.

Die Vorrichtung weist einen Extruder 10 auf, dessen Schnecke 11 durch einen Motor 12 angetrieben wird. Das thermoplastische Material wird über einen Trichter 13 in den Extruder 10 eingeführt, dem ein Strangpresskopf 14 nachgeschaltet ist, der im wesentlichen aus einem Gehäuse 15 und einem Kern 16 besteht. Letzterer ist vertikal hin- und herverschiebbar im Strangpresskopf 14 angeordnet. Der untere Bereich 17 des Kernes 16 stellt die innere Begrenzung eines Ringspaltes 18 dar. An seinem oberen Endbereich ist der Kern 16 mit einem Kolben 19 verbunden, der innerhalb eines Zylinders 20 geführt ist. Die Zu- und Ableitungen für das normalerweise hydraulische Druckmittel sind mit 22 u. 23 bezeichnet.

Das Gehäuse 15 des Strangpresskopfes 14 ist mit einer Eintrittsöffnung 24 für das vom Extruder 10 kommente thermoplastische Material versehen, welches, nachdem es die Eintrittsöffnung 24 passiert hat, sich um den Kern 16 des Strangpresskopfes verteilt und einen vom Kern 16 und dem Gehäuse begrenzten, im Querschnitt ringförmigen Kanal 25 durchströmt, der in den Ringspalt 18 übergeht. Aus diesem tritt das thermoplastische Material in Gestalt eines schlauchartigen Vorformlinges 26 kontinuierlich aus.

Der untere Bereich 17 des Kernes 16 und die ihm gegenüberliegenden Wandbereiche des Gehäuses 15 sind konisch ausgebildet, so dass eine Aufwärtsbewegung des Kernes 16 eine Verringerung und eine Abwärtsbewegung des Kernes 16 eine Vergrösserung der Breite des Spaltes 18 zur Folge haben.

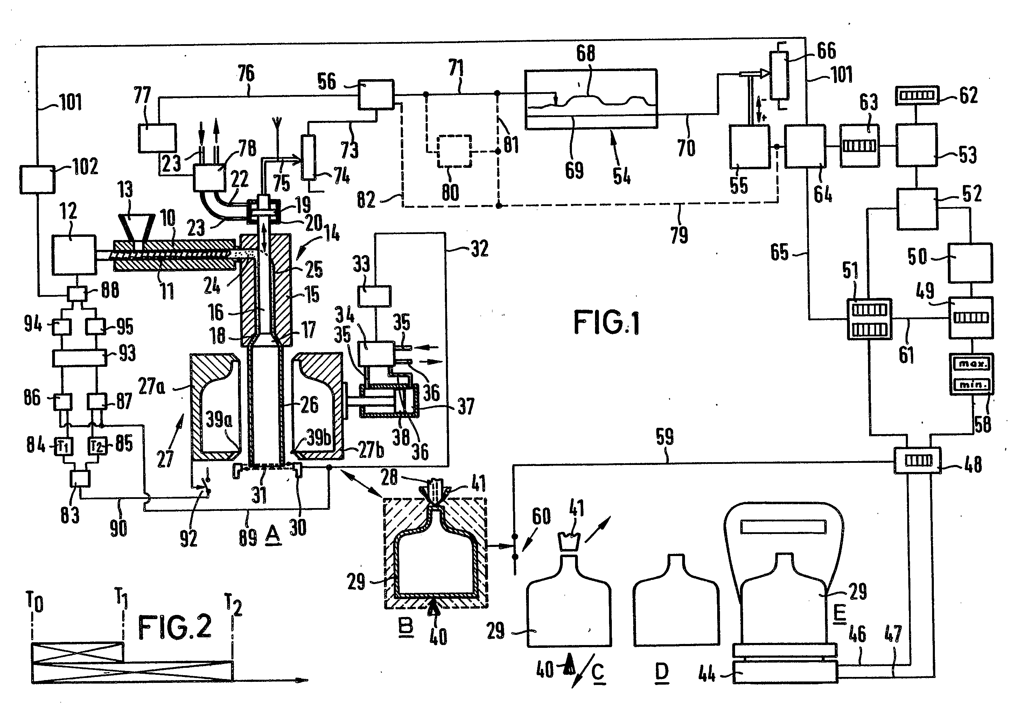

Unterhalb des Strangpresskopfes 14 ist eine aus zwei Blasformteilen 27a, 27b bestehende Blasform 27 angeordnet, die zwischen der in Fig. 1 der Zeichnung ausgezogen dargestellten Lage, in welcher sie sich unmittelbar unterhalb des Strangpresskopfes 14 in der Aufnahmestation A befindet, und einer seitlich darunter angeordneten Entformstation B hin- und herbewegbar ist. In der Zeichnung ist die Lage der Blasform 27 in der Entformstation B gestrichelt dargestellt. Dort ist der Blasform 27 ein vertikal hin- und herverschiebbarer Blasdorn 28 zugeordnet, durch den das den Vorformling 26 zum Hohlkörper 29 aufweitende Druckmittel zugeführt wird. Es bestehen auch andere Möglichkeiten der Zuführung des Druckmittels, beispielsweise über einen von unten in die Blasform und das eine Ende des darin befindlichen Vorformlings einführbaren Blasdorn.

An der Unterseite der Blasform 27 ist eine Fotozelle 30 so angeordnet, dass die ihr zugeordnete Lichtschranke 31 durch das untere Ende des Vorformlinges 26 unterbrochen wird, sobald dieser seine Soll-Länge erreicht hat. Die Fotozelle 30 ist über eine Leitung 32 mit einer Steuereinrichtung 33 verbunden, die ein Ventil 34 steuert, welches in die Zu- und Ableitungen 35, 36 eines Zylinders 37 eingeschaltet ist. Das von der Fotozelle 30 bei Unterbrechung der Lichtschranke 31 durch den Schlauch kommende Signal bewirkt eine Beaufschlagung des im Zylinder 37 geführten Kolbens 38 durch die Leitung 36, so dass die Blasform 27 geschlossen und dann in die Station B bewegt wird. Es sind Mittel bekannt, durch die die Bewegung des mit dem Kolben 28 verbundenen Blasformteiles 27b auf das Blasformteil 27a übertragen werden kann. Es besteht aber auch die Möglichkeit, den Blasformteilen 27a eine besondere Kolben-Zylinder-Anordnung — oder eine andere Antriebseinrichtung — zuzuordnen, die ebenfalls über die Steuereinrichtung 33 gesteuert werden könnte.

Beim Schliessen der Blasform 27 wird der Vorformling 26 von deren Teilen 27a und 27b erfasst, wobei am unteren Ende der Blasformteile befindliche Abquetschkanten 39a, 39b den Vorformling unter Bildung einer Schweissnaht verschliessen, wobei gleichzeitig ein Abfallstück 40 abgequetscht wird, das im Normalfall über einen dünnen Film mit dem herzustellenden Hohlkörper verbunden bleibt. Danach wird die Blasform 27 aus der Aufnahmestation A in die Entformstation B bewegt, so dass der unterhalb des Strangpresskopfes 14 befindliche Raum frei wird für die Bildung des nächstfolgenden Vorformlinges 26. Unmittelbar nach dem Eintreffen der Blasform 27 in der Entformstation B wird der Blasdorn 28 von oben in eine dort befindliche Öffnung der Blasform und das darin befindliche obere, noch offene Ende des Vorformlinges 26 eingestossen. Dabei wird durch Zusammenwirken von Blasdorn 28 und Hohlformteilen 27a, 27b weiteres Abfallmaterial 41 abgequetscht, das normalerweise ebenfalls über einen dünnen Film mit dem herzustellenden Hohlkörper 29 verbunden bleibt. Nach Aufweiten des Vorformlinges 26 und ausreichender Abkühlung und Verfestigung des daraus hergestellten Hohlkörpers 29 wird die Blasform in der Entformstation B geöffnet. Der Hohlkörper 29 wird aus der Blasform entfernt und in eine nachgeordnete Station C gebracht, in welcher die Abfallteile 40 und 41 entfernt werden. Dies kann normalerweise durch einen einfachen Abreissvorgang geschehen. Der Transport der Hohlkörper aus der Entformstation B in die nachgeordnete Station C und weitere noch zu beschreibende Stationen kann in der in der DE-OS 1 778 404 beschriebenen Weise erfolgen.

Nach der Herausnahme des Hohlkörpers 29 aus der Hohlform in der Station B wird die geöffnete Hohlform zur Aufnahme des nächstfolgenden Vorformlinges 26 in die Aufnahmestation A zurückbewegt.

Die von den Abfallteilen 40 und 41 befreiten Hohlkörper gelangen über eine Zwischenstation D, in der z.B. geprüft wird, ob die Abfallteile 40, 41 entfernt sind, auf eine in einer Station E befindliche Waage 44, die jeweils das Gewicht eines Hohlkörpers feststellt, der mit zwei Ausgängen 46 und 47 versehenen Waage ist ein Regelkreis nachgeordnet, der dazu dient, das Gewicht der Hohlkörper konstant so nahe wie möglich an einem Soll-Wert zu halten. Dieser Regelkreis weist eine Sperre 48, eine Gewichtsregistrierstufe 49, eine Addierstufe 50, eine Zählstufe 51 und eine Divisionsstufe 52 auf, der eine Vergleichsstufe 53 nachgeschaltet ist. Ferner sind ein Programmierer 54 sowie eine diesen beeinflussende Stelleinrichtung 55 und eine Regelstufe 56 vorgesehen, die den Ist-Wert der Position des Kernes 16 mit dem vom Programmierer 54 kommenden Soll-Wert vergleicht.

Über den Ausgang 47 wird bei jeder Wägung eines Hohlkörpers 29 das Absolutgewicht in das Register 49 gegeben, an welchem die Anzahl der jeweils für einen Vergleich mit ihrem Gewicht zu registrierenden Hohlkörper 29 einstellbar ist. Der Registrierstufe 49 ist eine Begrenzungseinrichtung 58 vorgeschaltet, in welcher ein Gewichtsbereich einstellbar ist, innerhalb dessen die festgestellten Gewichte der Hohlkörper 29 liegen müssen, damit sie in der nachfolgenden Registrierstufe 49 erfasst werden. Ausserhalb dieses Bereiches liegende Gewichte bleiben bei der Feststellung des Ist-Gewichtes bzw. des Ist-Mittelgewichtes unberücksichtigt oder werden bei der Weiterverarbeitung mit dem Max. oder Min.-Wert des Bereiches berücksichtigt.

Der andere Ausgang 46 der Waage 44 ist — ebenfalls über die Sperrstufe 48 — mit der Zählstufe 51 verbunden. Bei jeder Wägung wird — unter der Voraussetzung, dass die Sperrstufe 48 offen ist — ein Impuls in die Zählstufe 51 gegeben, an welcher die Anzahl der zur Mittelwertbildung zu zählenden Wägungen eingestellt werden kann. Ausserdem kann an der Zählstufe 51 die Anzahl der bis zum Eintreffen des ersten nach Spaltverstellung zwecks Gewichtskorrektur und ggf. notwendiger Änderung der Schneckengeschwindigkeit in der Wägestation E für den Gewichtsvergleich unberücksichtigt bleibenden Hohlkörper eingestellt werden.

Die Sperrstufe 48 ist über eine Leitung 59 mit einem Schalter 60 verbunden, der durch die Blasform 27 bei Erreichen ihrer Endstellung in der Entformstation B betätigt wird. Durch die Betätigung des Schalters 60 wird die Sperrstufe 48 entsperrt, so dass die Wägung des aus der Station D auf die Waage 44 gelangten Hohlkörpers 29 durchgeführt werden kann. Nach der Wägung und Abgabe des Ergebnisses und eines Impulses durch die Leitungen 47 bzw. 46 wird das Sperrglied 48 wieder wirksam gestellt, beispielsweise durch Aufhören der Beaufschlagung des Schalters 60 durch die Hohlform 27, bis im Zuge des folgenden Arbeitszyklus die Blasform 27 wieder in die Entformstation B gelangt und den Schalter 60 erneut betätigt. Auf diese Weise wird vermieden, dass irgendwelche Beaufschlagungen der Waage 44 zwischen zwei aufeinanderfolgenden Wägungen zu Fehlanzeigen führt. Derartige Beaufschlagungen können durch unbeabsichtigte Berührung der Waage oder aber auch bei der normalerweise erforderlichen Empfindlichkeit der Waage 44 durch Luftbewegungen verursacht werden.

Die das Sperren und Entsperren des Sperrgliedes 48 bewirkenden Signale können selbstverständlich auch von einer anderen Signalquelle abgegeben werden, die bezüglich der Zeit der Signalabgabe vergleichbare Voraussetzungen erfüllt.

Wenn die in der Zählstufe 51 vorgewählte Anzahl von Wägungen erreicht ist, wird über eine Leitung 61 ein Signal an die Registrierstufen 49 gegeben mit dem Ergebnis, dass die in letzterer abgelegten Absolutgewichte der vorausgegangenen Wägungen in der nachgeschalteten Stufe 50 addiert werden. Die dort gebildete Summe aller erfassten Gewichte wird in dem den Stufen 50 und 51 nachgeschalteten Teil 52 durch die Anzahl der Wägungen dividiert. Der so erhaltene Mittelwert wird in der Vergleichs- und Regelstufe 53 mit dem in der Stufe 62 eingestellten Soll-Wert verglichen. Proportional der Grösse einer eventuell festgestellten Differenz zwischen errechnetem Gewichts-Mittelwert und Gewichts-Sollwert wird eine Korrektur des Spaltes 18 im Sinne einer Vergrösserung oder Verkleinerung desselben durchgeführt.

Der Vergleichs- und Regelstufe 53 ist eine Schwellwertstufe 63 nachgeschaltet, auf welcher bezüglich der Gewichtsdifferenz eine Grenze eingestellt werden kann, bis zu welcher keine Verstellung des Spaltes 28 zwecks Beeinflussung des Gewichtes des Vorformlinges 26 und somit des aus diesem herzustellenden Hohlkörpers erfolgt. Die Einstellung eines Schwellwertes dient dazu, geringe Abweichungen des Mittelwertes vom Sollwert, die innerhalb der unvermeidlichen Toleranzen liegen, zu unterdrücken und so zu verhindern, dass ein Regelvorgang eingeleitet wird. Die Grösse eines solchen Schwellwertes kann auch durch die Arbeitstoleranzen der nachfolgenden Geräte bestimmt sein. Es kann jedoch auch zweckmässig sein, dass in der Schwellwertstufe maximale Schrittgrössen festgelegt werden, damit die notwendigen Änderungen keine zu starken Änderungen im übrigen Betriebsverhalten des Extruders bewirken.

Der Schwellwertstufe 63 ist ein Überwachungsglied 64 nachgeschaltet, welches feststellt, ob nach dem Vergleich in der Stufe 53 ein eine Verstellung des Spaltes 18 bewirkendes Signal abgegeben wurde. Wenn dies nicht der Fall ist, wird über eine Leitung 65 die Zählstufe 51 bezüglich der Einstellung einer bestimmten Anzahl von nicht zu zählenden Hohlkörpern nach Durchführung einer Verstellung des Spaltes 18 entsperrt. D.h., dass in diesem Fall die Auswertung der Wägeergebnisse fortgesetzt wird, ohne dass zuvor abgewartet wird, bis der erste nach Durchführung des in der Stufe 53 erfolgten Vergleichs hergestellte Hohlkörper 29 nach Passieren der Stationen B, C und D die Waage 44 in der Station E erreicht hat. Falls eine Spaltänderung durchgeführt wird, bleibt die Sperre in der Stufe 51 aufrechterhalten, bis über den Ausgang 46 die Anzahl der Impulse eingetroffen ist, die der voreingestellten Anzahl von nicht zu berücksichtigenden Hohlkörpern entspricht.

Der Stellmotor 55 wirkt mit einem Potentiometer 66 zusammen, das mit der Programmiereinrichtung 54 in Reihe geschaltet ist, in der ein bestimmtes Programm hinsichtlich der Verteilung der Wanddicke des Vorformlinges 26 über dessen Länge eingestellt ist. Zur Verdeutlichung des Sachverhaltes sind im Programmierer 54 zwei Linien 68, 69 eingezeichnet, die den Breitenverlauf des Spaltes 18 während der Dauer der Extrusion des Vorformlinges definieren. Die Kurve 68 entspricht der Wanddickenverteilung am Vorformling über dessen Länge, so dass die Länge der Kurve 68 im allgemeinen der Länge des Abschnittes des Vorformlinges entsprechen wird, aus dem in der Blasform 27 der Hohlkörper 29 hergestellt wird. Durch die in Abhängigkeit von der Abweichung des Ist-Gewichtes vom Soll-Gewicht veränderte Einstellung des Potentiometers 66 wird der durch das im Programmierer 54 eingestellte Programm definierte Verlauf der Wanddicke über die Länge des Vorformlinges gespreizt oder verengt, so dass sich die aus dem Gewichtsvergleich ergebende Spaltkorrektur die aus dem Wanddickenprogramm vorgegebene Spaltbreite proportional verändert.

Die Verbindung des Programmierers 54 mit dem vorgeschalteten Potentiometer 66 erfolgt über eine Leitung 70. Weiterhin ist der Programmierer 54 über eine Leitung 71 mit dem Vergleichs- und Regelglied 56 verbunden. Dieses erhält über eine Leitung 73 den Ist-Wert bezüglich der Breite des Spaltes 18 von einem Potentiometer 74, dessen Positionsanzeiger 75 mit dem Kern 16 des Strangpresskopfes 14 verbunden ist. Über eine weitere Leitung 76 besteht eine Verbindung mit einer Steuereinrichtung 77, die ein Ventil 78 steuert, welches in die mit dem Zylinder 20 verbundenen Leitungen 22 und 23 eingeschaltet ist.

Es besteht auch die Möglichkeit, das die Spalteinstellung beeinflussende Signal aus dem Überwachungsglied 64 über eine Leitung 79 in eine Addierstufe 80 zu geben, wo es zu einem vom Programmierer 54 über eine Leitung 81 kommenden Signal für die Steuerung der Wanddickenverteilung addiert wird. Bei dieser Ausgestaltung ist die Addierstufe 80 der Vergleichs- und Regelstufe 56 vorgeschaltet. Alle übrigen Teile bleiben unverändert mit der Ausnahme, dass Potentiometer 66 und Stellmotor 55 wegfallen. Die Addition der Signale führt allerdings nicht zu einer so präzisen Berücksichtigung der Änderung des Spaltes wie bei der vorbeschriebenen proportionalen Änderung über das Potentiometer 66 und dem Programmierer 54. In vielen Anwendungsfällen wird die Genauigkeit jedoch ausreichend sein.

Falls ein Programmieren nicht vorgesehen ist, kann der Ausgang des Überwachungsgliedes 64 über eine Leitung 82 direkt mit dem Vergleichs- und Regelglied 56 verbunden sein.

Es wird angestrebt, dass die Zeit, die für die Herstellung des Vorformlinges 26 erforderlich ist, übereinstimmt mit der Zeit, die die Blasform 27 benötigt, um aus der Station A in die Station B und wieder in die in der Zeichnung dargestellte Ausgangslage in der Station A zu gelangen, so dass die Blasform in dem Augenblick, in dem der Vorformling 26 seine Soll-Länge erreicht, ihre Ausgangsposition in der Station A einnimmt. Im praktischen Betrieb sind jedoch — unabhängig von allen Regeleingriffen — auch bei konstanter Breite des Spaltes 18 Schwankungen in bezug auf die Förderleistung des Extruders, also die pro Zeiteinheit aus dem Strangpresskopf ausgestossene Materialmenge, unvermeidbar. Es muss somit mit der Möglichkeit gerechnet werden, dass der Vorformling 26 früher oder später als vorgesehen seine Soll-Länge erreicht, wobei davon auszugehen ist, dass — abgesehen vom Vorgang des Schliessens der Blasform um den Vorformling 26 in der Station A — alle anderen Bewegungen der Blasform und Blasformteile in Abhängigkeit von der Zeit ausgeführt werden. Diesen Schwankungen wird einmal dadurch Rechnung getragen, dass die Blasform 27 in Abhängigkeit von der Soll-Länge des Vorformlinges geschlossen wird. Um bei zu hoher Austrittsgeschwindigkeit des Vorformlinges zu vermeiden, dass dieser zu lang wird, weil die Blasform 27 zum Zeitpunkt des Erreichens der Soll-Länge ihre Ausgangsposition in der Station A noch nicht einnimmt, kann in den Arbeitszyklus der Blasform eine kurze Wartezeit eingeplant sein derart, dass die — abgesehen vom Schliessvorgang — zeitabhängig gesteuerte Blasform bereits eine kurze Zeitspanne vor dem theoretischen Zeitpunkt, in welchem der Vorformling 26 eine Soll-Länge erreichen wird, die Ausgangsposition in der Station A einnimmt.

Im übrigen werden unabhängig von der Spaltverstellung und eine dadurch bewirkte Änderung der Austrittsgeschwindigkeit des Vorformlinges über eine Steuereinrichtung die Drehzahl der Schnecke 11 und damit die Austrittsgeschwindigkeit des Vorformlinges 26 und im Ergebnis die für seine Feststellung benötigte Zeit so konstant wie möglich gehalten. Diese Steuereinrichtung ist mit einem Zeitzähler 83 versehen, dem zwei Zeitglieder 84, 85 parallel nachgeschaltet sind, von denen das Zeitglied 84 auf den Zeitpunkt T1 und das Zeitglied 85 auf den später liegenden Zeitpunkt T2 eingestellt sind. T1 bezeichnet dabei den Zeitpunkt im Ablauf eines Arbeitszyklus, in welchem bei absolut regelmässigem Arbeiten des Extruders 10 der Vorformling 26 seine Soll-Länge erreicht hat und das Schliessen der Blasform 27 auslöst. Den beiden Zeitgliedern 84 und 85 ist jeweils ein Vergleichselement 86 bzw. 87 nachgeordnet. Zusätzlich sind die beiden Vergleichselemente 86 und 87 über eine Leitung 89 mit der Fotozelle 30 verbunden. Der Zeitzähler 83 ist über eine Leitung 90 mit einem Schalter oder dgl. 92 verbunden, der durch die Blasform 27 oder eines der Blasformteile 27a, 27b betätigt wird, sobald die Blasform 27 ihre in der Zeichnung dargestellte Ausgangsposition A zum Zeitpunkt T0 einnimmt. Durch Schalten des Zeitzählers 83 zum Zeitpunkt T0 durch das Signal des Schalters 92 werden die Zeitpunkte T1 und T2 in den Zeitgliedern 83 und 85 festgelegt. Auch wenn der Vorformling 26 seine Soll-Länge vor dem Zeitpunkt T1 erreichen sollte, findet er in der Station A die in ihrer Ausgangsposition befindliche Blasform 27 vor, da diese bereits zum Zeitpunkt T0 dort eingetroffen war (vgl. Fig. 2).

Voraussetzung ist lediglich, dass der Abstand zwischen den beiden Zeitpunkten T0 und T1 den üblichen, unvermeidbaren Schwankungen der Schneckenpresse entspricht. Diese halten sich bei normalem Betrieb in so engen Grenzen, dass durch das Eintreffen der Hohlform 27 bereits zum Zeitpunkt T0 in der Station A kein ins Gewicht fallender Zeitverlust entsteht.

Bei Erreichen des im Zeitglied 84 vorgewählten Zeitpunktes T1 gibt dieses ein Signal an das Vergleichselement 86. Ebenso gibt das Zeitglied 85 ein Signal an das Vergleichselement 87, wenn der vorgewählte Zeitpunkt T2 erreicht ist. Wenn das von der Fotozelle 30 kommende Signal, welches angibt, dass der Vorformling 26 seine Soll-Länge erreicht hat, später eintrifft als die vorgesehene Zeit T1, bleibt die Extruderdrehzahl unverändert unter der Voraussetzung, dass dieses Signal vor dem im Zeitglied 85 eingestellten Zeitpunkt T2 eintrifft. D.h., dass in diesem Fall keines der Vergleichselemente 86, 87 ein Signal an die nachgeordneten Elemente weitergibt. Wenn jedoch das Signal von der Fotozelle 30 vor dem Zeitpunkt T1 eintrifft, wird vom Vergleichselement 86 ein diesem nachgeordnetes Schaltglied 94 betätigt, welches über ein geeignetes Stellglied 88, das ein Motorpotentiometer, ein Stellmotor oder dgl. sein kann, die Drehzahl des die Schnecke 11 antreibenden Motors verringert.

Wenn das von der Fotozelle 30 kommende Signal später eintrifft als dem im Zeitglied 85 eingestellten Zeitpunkt T2 entspricht, gibt das Vergleichselement 87 ein Signal, welches über das ihm nachgeordnete Schaltglied 95 derart auf das Stellglied 88 einwirkt, dass die Drehzahl des Motors 12 und somit der Schnecke 11 erhöht wird. Ein Zwischenglied 93 dient der Festlegung der Korrekturgrösse, also des Ausmasses, um welches jeweils bei einem eine Änderung bewirkenden Signal die Drehzahl des Motors 12 verringert oder vergrössert wird. Irgendwelche von der Fotozelle 30 kommenden Signale, die zwischen den Zeitpunkten T1 und T2 liegen, haben keinerlei Auswirkungen auf die Drehzahl der Schnecke 11.

Die vorbeschriebene Steuereinrichtung ist in der Lage, Änderungen der Austrittsgeschwindigkeit des Vorformlinges 26 und damit der Zeit, die benötigt wird, damit der Vorformling 26 seine Soll-Länge erreicht, zu erfassen und auch die entsprechenden Steuermassnahmen zu bewirken, um über eine Änderung der Drehzahl der Schnecke 11 die für die Herstellung des Vorformlinges 26 benötigte Zeit annähernd konstant zu halten. Dies gilt auch für solche Änderungen der Austrittsgeschwindigkeit, die durch eine Veränderung des Spaltes zwecks Anpassung des Hohlkörpergewichts an das Soll-Gewicht verursacht werden. D.h., dass diese Steuereinrichtung geeignet ist, die der Erfindung zugrunde liegende Aufgabe zu lösen und den angestrebten Effekt zu erreichen. Es besteht aber auch die Möglichkeit, die bei dieser Spaltverstellung normalerweise eintretende Änderung der Austrittsgeschwindigkeit des Vorformlings 26 aus dem Ringspalt 18 direkt, also ohne Zwischenschaltung der Steuereinrichtung 83 bis 87 zu bewirken. Zu diesem Zweck kann von der Vergleichs- und Regelstufe 53 oder einer der nachgeordneten Stufen eine Leitung 101 unter Zwischenschaltung eines Steuergliedes 102 mit dem Stellglied 88 verbunden sein, so dass bei Ermittlung einer Differenz zwischen Soll-Wert und Ist-Wert bezüglich des Hohlkörpergewichtes im Vergleichs- und Regelglied 53 ein entsprechendes Signal an das Steuerglied 102 gegeben wird, welches über das Stellglied 88 die Drehgeschwindigkeit der Schnecke 11 im erforderlichen Sinne beeinflusst. Der Vorteil einer solchen Anordnung kann darin bestehen, dass es bei normalen Betriebsbedingungen möglich ist, Änderung der Spaltbreite und Anpassung der Schneckendrehzahl mehr oder weniger gleichzeitig durchzuführen, so dass bei der Herstellung des auf die Änderung der Spaltbreite folgenden Vorformlings 26 die Abweichung von der Soll-Austrittsgeschwindigkeit nicht oder nur in geringerem Umfang vorhanden ist. Im anderen Fall, wenn die durch die Änderung der Breite des Spaltes bewirkte Änderung der Austrittsgeschwindigkeit des Vorformlinges 26 durch die Steuereinrichtung 80 bis 87 erfasst werden sollte, würde dies frühestens beim darauffolgenden Arbeitszyklus möglich sein, so dass bis zum Beginn der Wägung in der Station E noch ein weiterer Arbeitszyklus abgewartet werden müsste, bevor der erste Hohlkörper in der Station E nach Abschluss der Änderung des Spaltes und Abschluss der Anpassung der Betriebsverhältnisse der Schneckenpresse an diese Änderung gewogen werden könnte.

Bei Vergleich der festgestellten Gewichte der Einzelhohlkörper mit dem Soll-Wert ohne vorangegangene Mittelwertbildung würde das festgestellte Gewicht jeweils direkt in die Stufe 53 gegeben werden. Der Zählstufe 51 käme dann nur noch die Funktion zu, die Arbeitszyklen zu zählen, während welcher nach Änderung des Spaltes keine Wägung durchgeführt wird.

Entsprechendes gilt auch dann, wenn bei Mittelwertbildung in der Registrierstufe 49 nach jedem Wägevorgang das gerade festgestellte Gewicht registriert und dafür das auf den am weitesten zurückliegenden Wägevorgang zurückgehende Gewicht gelöscht wird. In diesem Falle wird auch nach jedem Arbeitszyklus ein Vergleich angestellt, solange eine Verstellung des Spaltes nicht erfolgt. In der Registrierstufe 49 wäre dann die Anzahl der Hohlkörper einzustellen, die eine Gruppe für die Mittelwertfeststellung bilden.

## Patentansprüche

1. Vorrichtung zum Beeinflussen des Gewichtes eines im Extrusionsblasverfahren hergestellten Hohlkörpers aus thermoplastischem Kunststoff, bei welcher ein vorzugsweise schlauchförmiger Vorformling kontinuierlich aus einem einer Schneckenpresse nachgeschalteten Strangpresskopf durch eine spaltartige Öffnung desselben extrudierbar ist und das Gewicht des Hohlkörpers nach Verlassen der Blasform festgestellt und mit einem Soll-Wert verglichen und in Abhängigkeit vom Ergebnis des Vergleichs die Spaltbreite der Austrittsöffnung zur Regulierung des Gewichts des den Vorformling bildenden Materials verstellbar ist, dadurch gekennzeichnet, dass eine die Länge des Vorformlinges (26) erfassende Einrichtung, mittels welcher ein Signal für die Steuerung der Bewegungen der Blasformteile (27a, 27b) oder der Blasform auslösbar ist, und eine Steuereinrichtung (83 - 87), mittels welcher die Zeit, in welcher ein Vorformling gebildet wird, möglichst konstant gehalten wird, vorgesehen sind.

2. Vorrichtung nach Anspruch 1, dadurch gekennzeichnet, dass die Zeit für die Herstellung eines Vorformlinges (26) durch Regulierung der Drehgeschwindigkeit der Schnecke (11) der Schneckenpresse (10) beeinflussbar ist.

3. Vorrichtung nach Anspruch 2, dadurch gekennzeichnet, dass die Drehgeschwindigkeit der Schnecke (11) der Schneckenpresse (10) in Abhängigkeit von der Änderung der Spaltbreite der Austrittsöffnung (18) zur Regulierung des Volumens bzw. Gewichtes des den Vorformling (26) bildenden Materials veränderbar ist.

4. Vorrichtung nach Anspruch 1, dadurch gekennzeichnet, dass nach einer Verstellung der Spaltbreite der jeweils folgende Vergleich des Hohlkörpergewichtes mit einem Soll-Wert nach einer Zeitspanne durchgeführt wird, die wenigstens der Anzahl der Arbeitszyklen entspricht, die zwischen dem Zeitpunkt der Herstellung eines Hohlkörpers (29) und dem Zeitpunkt der Feststellung des Gewichtes desselben Hohlkörpers (29) liegen.

5. Vorrichtung nach einem der vorhergehenden Ansprüche, dadurch gekennzeichnet, dass nach einer Regulierung der Drehgeschwindigkeit der Schnecke (11) noch ein zusätzlicher Arbeitszyklus abgewartet wird, bevor der jeweils folgende Vergleich des Hohlkörpergewichtes mit einem Soll-Wert durchgeführt wird.

6. Vorrichtung nach einem der vorhergehenden Ansprüche, dadurch gekennzeichnet, dass nach einer Drehzahländerung der Schnecke (11) der Gewichtsvergleich erst durchgeführt wird, nachdem die Betriebsverhältnisse der Schneckenpresse (10) sich wieder stabilisiert haben und nach Stabilisierung eine Zeitspanne vergangen ist, die der Anzahl der Arbeitszyklen entspricht, die zwischen dem Zeitpunkt der Stabilisierung und dem Zeitpunkt der Gewichtsfeststellung liegen.

7. Vorrichtung nach einem der vorhergehenden Ansprüche, dadurch gekennzeichnet, dass das Gewicht einzelner Hohlkörper (29) mit dem Soll-Wert verglichen wird.

8. Vorrichtung nach einem der vorhergehenden Ansprüche, dadurch gekennzeichnet, dass aus dem Gewicht mehrerer zweckmässig aufeinanderfolgender Hohlkörper (29) ein Mittelwert gebildet wird, der mit dem Soll-Wert verglichen wird.

9. Vorrichtung nach Anspruch 8, dadurch gekennzeichnet, dass die Bildung eines Mittelwertes aus dem Gewicht mehrerer zweckmässig aufeinanderfolgender Hohlkörper (29) fortlaufend durchgeführt wird und nach jedem Arbeitszyklus der jeweils älteste Hohlkörper (29) der für die vorangegangene Mittelwertbildung verwendete Hohlkörpergruppe durch einen neuen Hohlkörper (29) ersetzt wird.

10. Vorrichtung nach einem der vorhergehenden Ansprüche, dadurch gekennzeichnet, dass die Spaltbreite der Austrittsöffnung (18) erst nach Überschreiten eines vorher bestimmten Toleranzbereiches in bezug auf die Gewichtsabweichung verstellt wird.

11. Vorrichtung nach einem der vorhergehenden Ansprüche, dadurch gekennzeichnet, dass nur innerhalb eines bestimmten Gewichtsbereiches liegende Gewichtsabweichungen für die Einstellung der Spaltbreite der Austrittsöffnung (18) berücksichtigt werden.

12. Vorrichtung nach Anspruch 11, dadurch gekennzeichnet, dass bei Überschreiten oder Unterschreiten des bestimmten Gewichtsbereiches der der jeweiligen Grenze des Bereiches entsprechende Wert für die Mittelwertbildung benutzt wird.

13. Vorrichtung nach einem der vorhergehenden Ansprüche, dadurch gekennzeichnet, dass Hohlkörper (29) oder Gruppen von Hohlkörpern fortlaufend gewogen und die festgestellten Gewichte mit dem Soll-Wert verglichen werden, solange das Vergleichsergebnis zu keiner Änderung der Breite des Austrittsspaltes (18) führt.

14. Vorrichtung nach einem der vorhergehenden Ansprüche, dadurch gekennzeichnet, dass bei einer voreinstellbaren Anzahl von Unterschreitungen oder Überschreitungen der Grenzen des voreingestellten Bereiches ein Signal ausgelöst wird.

15. Vorrichtung nach einem der vorhergehenden Ansprüche, dadurch gekennzeichnet, dass das Ausmass der Änderung der Breite des Austrittsspaltes (18) abhängig ist vom Ausmass der Abweichung des Hohlkörpersgewichtes bzw. des Mittelwertes vom Soll-Gewicht.

16. Vorrichtung nach einem der vorhergehenden Ansprüche, dadurch gekennzeichnet, dass die Änderung der Breite des Spaltes (18) in Abhängigkeit vom Gewichtsvergleich im Bereich des Überganges von zwei aufeinanderfolgenden Vorformlingen (26) durchgeführt wird.

17. Vorrichtung nach einem der vorhergehenden Ansprüche, dadurch gekennzeichnet, dass eine notwendige Änderung der Breite des Spaltes (18) pro Arbeitszyklus um einen voreinstellbaren Schritt erfolgt.

## Claims

1. An apparatus for controlling the weight of a hollow member of thermoplastic material made by extrusion blow moulding, wherein a preferably hose-shaped preform is continuously extrudable through a gap-shaped opening of an extruder head connected at the outlet of a screw extruder, and after the hollow member has left the blow mould its weight is determined and compared with a reference value, and in dependance on the result of the comparison the gap width of said discharge opening is adjustable to regulate the weight of material forming the preform, characterised in that it has means for detecting the length of the preform (26) by which is triggered a signal for controlling movement of the blow mould parts (27a, 27b) or the blow mould, and control means (83-87) for maintaining at a substantially constant value the time in which a preform is formed.

2. An apparatus according to claim 1, characterised in that the time for the manufacture of a preform (26) is controllable by the regulation of the speed of rotation of the screw (11) of the screw extruder (10).

3. An apparatus according to claim 2, characterised in that the speed of rotation of the screw (11) of the screw extruder (10) is variable in dependance on the change in the gap width of the discharge opening (18) to control the volume or weight of material forming the preform (26).

4. An apparatus according to claim 1, characterised in that after the gap width has been adjusted, the next following comparison of the weight of the hollow member with the reference value is performed after a period of time which corresponds at least to the number of working cycles which take place between the moment of production of a hollow member (29) and the moment of detecting the weight of the same hollow member (29).

5. An apparatus according to any of the preceding claims, characterised in that after the speed of rotation of the screw (11) has been regulated an additional work cycle is waited for before the next following comparison of the weight of the hollow member with the reference value.

6. An apparatus according to any of the preceding claims, characterised in that after there has been a change in the speed of rotation of the screw (11), the weight comparison is performed only after the operating conditions of the screw extruder (10) have re-stabilised and a period of time has passed after the re-stabilisation, which corresponds to the number of working cycles between the moment of the re-stabilisation and the moment of the weight detection.

7. An apparatus according to any of the preceding claims, characterised in that the weight of the individual hollow members (21) is compared with the reference value.

8. An apparatus according to any of the preceding claims, characterised in that a mean value is formed from the weights of a plurality of, expediently successive, hollow members which is compared with the reference value.

9. An apparatus according to claim 8, characterised in that the formation of mean value from the weights of a plurality of, expediently successive hollow members (29) is performed continuously and after each operating cycle the respective oldest hollow member (29) of the group of the members used for the preceding formation of the mean weight is replaced by a fresh hollow member (29).

10. An apparatus according to any of the preceding claims, characterised in that the gap width of the discharge opening (18) is adjusted only after a predetermined tolerance range with regard to weight deviation has been exceeded.

11. An apparatus according to any of the preceding claims, characterised in that only weight deviations which are within a given weight range are taken into consideration for the adjustment of the gap width of the discharge opening (18).

12. An apparatus according to claim 11, characterised in that when the given range is not reached or is exceeded, the value corresponding to the respective limit of the range is used for the formation of the mean value.

13. An apparatus according to any of the preceding claims, characterised in that hollow members (29) or groups of hollow members are continuously weighed and the detected weights compared with the reference value until the result of the comparison does not require a change in the width of the discharge gap (18).

14. An apparatus according to any of the preceding claims, characterised in that a signal is triggered when the limits of the preselected range have not been reached or were exceeded for a predetermined number of times.

15. An apparatus according to any of the preceding claims, characterised in that the extent of the change in the width of the discharge gap (18) is dependent on the extent of the deviation of the weight of the hollow member or the mean value from the reference value.

16. An apparatus according to any of the preceding claims, characterised in that the change in the width of the gap (18) is made in dependence on the weight comparison in the region of transition between two successive preforms (26).

17. An apparatus according to any of the preceding claims, characterised in that a necessary change in the width of the gap (18) per work cycle proceeds in a pre-adjustable step.

## Revendications

1. Dispositif pour influencer le poids d'un corps creux en matière synthétique thermoplastique fabriqué par le procédé d'extrusion-soufflage, dans lequel une ébauche de préférence tubulaire peut être extrudée de façon continue, à travers l'ouverture en forme de fente d'une tête d'extrusion faisant suite à une extrudeuse à vis et dans lequel le poids du corps creux, une fois qu'il a quitté le moule de soufflage, est constaté et comparé à une valeur de consigne tandis que sous la dépendance du résultat de cette comparaison, la largeur de fente de l'ouverture de sortie peut être réglée pour la régulation du poids de la matière formant l'ébauche, caractérisé en ce qu'il est prévu un dispositif déterminant la longueur de l'ébauche (26) et au moyen duquel un signal peut être déclenché pour la commande des mouvements des parties de moule de soufflage (27a, 27b) ou du moule de soufflage, et un dispositif de commande (83-87) au moyen duquel le temps pendant lequel se forme une ébauche est maintenu autant que possible constant.

2. Dispositif selon la revendication 1, caractérisé en ce que le temps de fabrication d'une ébauche (26) peut être influencé par régulation de la vitesse de rotation de la vis (11) de l'extrudeuse à vis (10).

3. Dispositif selon la revendication 2, caractérisé en ce que la vitesse de rotation de la vis (11) de l'extrudeuse à vis (10) peut être modifiée sous la dépendance de la variation de la largeur de fente de l'ouverture de sortie (18) pour la régulation du volume ou du poids de la matière formant l'ébauche (26).

4. Dispositif selon la revendication 1, caractérisé en ce qu'après une modification du réglage de la largeur de fente, la comparaison du poids du corps creux à une valeur de consigne s'effectue chaque fois au bout d'un laps de temps qui correspond au moins au nombre de cycles de travail qui se situent entre le moment de la fabrication d'un corps creux (29) et le moment de la constatation du poids de ce même corps creux (29).

5. Dispositif selon l'une des revendications précédentes, caractérisé en ce qu'après une régulation de la vitesse de rotation de la vis (11), on attend encore un cycle de travail supplémentaire avant d'effectuer chaque fois ensuite la comparaison du poids du corps creux à une valeur de consigne.

6. Dispositif selon l'une des revendications précédentes, caractérisé en ce qu'après une modification de la vitesse de rotation de la vis (11), la comparaison de poids s'effectue seulement une fois que les conditions de fonctionnement de l'extrudeuse à vis (10) se sont à nouveau stabilisées et qu'il s'est écoulé, après la stabilisation, un laps de temps qui correspond au nombre de cycles de travail qui se situent entre le moment de la stabilisation et le moment de la constatation du poids.

7. Dispositif selon l'une des revendications précédentes, caractérisé en ce que l'on compare à la valeur de consigne le poids de corps creux individuels (29).

8. Dispositif selon l'une des revendications précédentes, caractérisé en ce que, du poids de plusieurs corps creux (29), de préférence successifs, on forme une moyenne que l'on compare à la valeur de consigne.

9. Dispositif selon la revendication 8, caractérisé en ce que la formation d'une moyenne, en partant du poids de plusieurs corps creux (29) de préférence successifs, s'effectue continuellement et, qu'après chaque cycle de travail, on remplace chaque fois le corps creux (29) le plus ancien du groupe de corps creux utilisé pour la formation précédente de la moyenne, par un nouveau corps creux (29).

10. Dispositif selon l'une des revendications précédentes, caractérisé en ce que l'on modifie le réglage de largeur de fente de l'ouverture de sortie (18) seulement lorsque l'écart de poids a dépassé une marge de tolérance prédéterminée.

11. Dispositif selon l'une des revendications précédentes, caractérisé en ce que l'on tient seulement compte, pour le réglage de la largeur de fente de l'ouverture de sortie (18), d'écarts de poids qui se situent dans le cadre d'une gamme de poids déterminée.

12. Dispositif selon la revendication 11, caractérisé en ce que, lorsque le poids devient supérieur ou inférieur à la gamme de poids déterminée, on utilise pour la formation de la moyenne la valeur qui correspond à la limite respective de la gamme.

13. Dispositif selon l'une des revendications précédentes, caractérisé en ce que l'on pèse continuellement des corps creux (29) ou des groupes de corps creux et que l'on compare les poids constatés à la valeur de consigne, aussi longtemps que le résultat de la comparaison ne conduit pas à une modification de la largeur de la fente de sortie (18).

14. Dispositif selon l'une des revendications précédentes, caractérisé en ce que, lorsque les limites de la gamme préréglée ont été franchies, vers le bas ou vers le haut, un nombre préréglable de fois, un signal est déclenché.

15. Dispositif selon l'une des revendications précédentes, caractérisé en ce que le degré de la modification de la largeur de la fente de sortie (18) dépend du degré d'écart du poids du corps creux, ou de la moyenne, par rapport au poids de consigne.

16. Dispositif selon l'une des revendications précédentes, , caractérisé en ce que la modification de la largeur de la fente (18) sous la dépendance de la comparaison de poids s'effectue dans la zone de transition de deux ébauches successives (26).

17. Dispositif selon l'une des revendications précédentes, caractérisé en ce qu'une modification nécessaire de la largeur de la fente (18) s'effectue, par cycle de travail, à raison d'une étape préréglable.

FIG.1

FIG.2